# EUROPÄISCHE PATENTSCHRIFT

(11) **EP 0 652 818 B1**
(45) Veröffentlichungstag und Bekanntmachung des Hinweises auf die Patenterteilung: **22.04.1998**
(21) Anmeldenummer: 93915874.7
(22) Anmeldetag: 10.07.1993
(51) Int. Cl.: B29C 70/64, B60R 13/02, C08L 89/06

(54) **VERFAHREN ZUR HERSTELLUNG VON FORMTEILEN MIT LEDERARTIGEN OBERFLÄCHENEIGENSCHAFTEN IM KRAFTFAHRZEUGBEREICH**
A METHOD FOR PRODUCTION OF MOULDED ARTICLES WITH LEATHER-LIKE SURFACE PROPERTIES FOR USE IN THE AUTOMOBILE INDUSTRY
METHODE DE PRODUCTION D'ARTICLES MOULES A PROPRIETES SUPERFICIELLES ANALOGUES AU CUIR, POUR L'INDUSTRIE AUTOMOBILE

(30) Priorität: 18.07.1992 DE 4223703
(43) Veröffentlichungstag der Anmeldung: 17.05.1995
(73) Patentinhaber: HP-CHEMIE PELZER RESEARCH & DEVELOPMENT Ltd., Waterford, County Waterford (IE)
(72) Erfinder: PELZER, Helmut, D-5810 Witten-Annen (DE)
(74) Vertreter: Jönsson, Hans-Peter, Dr.Dipl.-Chem.
(86) Internationale Anmeldenummer: EP9301812
(87) Internationale Veröffentlichungsnummer: WO9402300

(56) Entgegenhaltungen:
- EP-A- 0 089 029
- EP-A- 0 092 594
- EP-A- 0 256 663
- DE-A- 2 700 505
- DE-A- 3 823 157
- US-A- 4 497 871
- DATABASE WPI Week 8704, Derwent Publications Ltd., London, GB; AN 87-024105; & HU-A-40 316 (NADEX NADGAZDASAGI)
- DATABASE WPI Week 8244, Derwent Publications Ltd., London, GB; AN 82-93597E; & JP-A-57 154 472 (OKABE KINZOKU KOGYO) 24 September 1982

## Beschreibung

Gegenstand der Erfindung ist ein Verfahren zur Herstellung von Formteilen mit lederartigen Oberflächen im Kraftfahrzeugbereich.

Aus "Ullmanns Encyklopädie der technischen Chemie", 4. Aufl. Bd. 16, S. 174 ist die Verwendung von Lederabfällen bekannt. Hiernach können Lederabfälle zerfasert werden und lassen sich dann zu Lederfaserwerkstoffen verarbeiten. Hierunter werden einschichtige Flächengebilde aus Lederfasern und Bindemitteln verstanden. Danach werden die Lederfaserwerkstoffe für Täschnerwaren, vor allem aber in der Schuhfertigung sowie für technische Lederdichtungen eingesetzt. Die Lederabfälle werden beispielsweise in Schlagmühlen naß oder trocken oder aber in Zahnscheibenmühlen und Raffineuren oder auch in Mahlholländern naß zerfasert, wobei die Fasern eine Länge von 3 bis 12 mm haben sollen. Als Bindemittel haben sich in Wasser unlösliche, insbesondere natürliche oder künstliche Kautschuklatices sowie Dispersionen von Acrylester-, Vinylester- und Isobutylen-Polymerisaten und Mischpolymerisaten bewährt. Die Menge an Bindemittel beträgt zwischen 8 und 40 %. Bei Lederfaserwerkstoffen mit höheren Anteilen (20 bis 30 %) an Wasser unlöslichen Bindemitteln überwiegt hiernach der Charakter des Bindemittels. Bei Erzeugnissen mit niedrigerem Bindemittelgehalt (unter 20 %) überwiegt der Fasercharakter; diese Materialien sind saugfähiger und lederähnlicher.

Aus der EP-A-0 089 029 sind Formteile mit lederartigen Oberflächeneigenschaften bekannt, umfassend ein thermoplastischen oder elastischen duroplastischen Kunststoff und gemahlene Lederabfälle mit einer Faserlänge von 0 bis 1/4" in einer Menge von 60 bis 90 %, bezogen auf das Formteil.

Aus EP-A-0 256 663 sind Formteile mit lederartigen Oberflächeneigenschaften bekannt, umfassend einen thermoplastischen oder elastischen duroplastischen Kunststoff und gemahlene Lederabfälle mit einer Faserlänge von 0 bis 8 mm in einer Menge von 5 bis 80 %, bezogen auf das Formteil.

Aus DE 34 17 369 C2 ist ein Verfahren zur Herstellung eines spritzgießbaren Verbundmaterials bekannt, bei der eine Polyester-Baumwoll-Mischfaser aus Stoffabfällen mit einem Polyolefin verschmolzen wird. Dem so hergestellten Material fehlt es an der ausreichenden Wasseraufnahmefähigkeit ebenso wie an den ledertypischen Griffeigenschaften.

Die DE 21 20 149 A1 bescheibt wetterfeste und verwindungsfeste Platten, Röhren, Stäbe und sonstige Formteile, bestehend aus Bindemitteln und Füllmaterial aus Altmaterial, unter anderem Abfälle von Papieren, Kartonage, Trikotagen, Baumwollen, Leinen, Kunstfasern, Leder, Lumpen, Heu, Stroh, Laub, Gras, Hülsen von Getreide und Früchten, Kerne und Schalen von Obst und Kartoffeln sowie Metallspäne, -körner, -pulver, Metalle, Styropor, Abfälle der Kunststofffertigung, Naturfasern wie Jute, Sisal oder Hanf. Angabe über die Mengen der eingesetzten Füllmaterialien sind nicht enthalten.

Demgegenüber besteht die Aufgabe der vorliegenden Erfindung darin, Formteile mit lederartigen Oberflächeneigenschaften im Kraftfahrzeugbereich auf der Basis von thermoplastischen oder elastischen duroplastischen Kunststoffen zur Verfügung zu stellen, die jedoch einen lederähnlichen weichen Griff und die für Leder typische Wasseraufnahmefähigkeit aufweisen.

In einer ersten Ausführungsform der vorliegenden Erfindung wird die vorgenannte Aufgabe gelöst durch ein Verfahren zur Herstellung von Formteilen mit lederartigen Oberflächeneigenschaften im Kraftfahrzeugbereich, umfassend einen thermoplastischen oder elastischen duroplastischen Kunststoff und gemahlene Lederabfälle dadurch gekenzeichnet, daß man dem Kunststoff während der Polymerisation oder Polykondensation gemahlene Lederabfälle mit einer Faserlänge von 0,1 bis 5 mm in einer Menge von 60 bis zu 95 Gew.-%, bezogen auf das Formteil, beigibt.

Lenkradumhüllungen im Automilbereich werden häufig aus thermoplastischen Polyurethanschäumen hergestellt. Der Schaumstoff wird nach an sich bekannten Spritzgußverfahren auf einen Kern aus Metall oder splitterfestem Kunststoff aufgebracht. Die Nachteile derartiger, im Stand der Technik bekannter, Lenkradumhüllungen bestehen jedoch in der nicht vorhandenen Wasseraufnahmefähigkeit und dem relativ harten Griff des verwendeten Polyurethanschaums.

Mit Hilfe der vorliegenden Erfindung konnte nunmehr gefunden werden, daß bei Verwendung von gemahlenen Lederabfällen die Oberflächeneigenschaften derartiger Formteile erheblich verbessert werden konnten. So wurde ein lederähnlicher weicher Griff und eine hohe Wasseraufnahmefähigkeit erreicht, wenn man dem Polyurethan während des Umspritzens Lederabfälle in einer Menge von beispielsweise 70 Gew.% beigibt.

Die Faserlänge der Lederabfälle beeinflußt im wesentlichen die Oberflächenstruktur und insbesondere die optische Erscheinung und den Griff der herzustellenden Formteile. Demgemäß beträgt die Faserlänge der Lederabfälle 0,1 bis 5 mm.

Neben der Faserlänge ist selbstverständlich auch die Menge der einzusetzenden gemahlenen Lederabfälle von besonderer Bedeutung für die lederartigen Oberflächeneigenschaften. Eine zu geringe Menge an gemahlenem Leder nicht geeignet, die gewünschten lederartigen Oberflächeneigenschaften zur Verfügung zu stellen. Demgemäß ist es Bestandteil der vorliegenden Erfindung besonders bevorzugt, die gemahlenen Lederabfälle in einer Menge von 60 bis 95 Gew.% beizugeben.

Die gewünschten Oberflächeneigenschaften können durch nachträgliche Behandlungen der Oberfläche mit verschiedensten Verfahren weiter verfeinert oder hervorgehoben werden. So ist es möglich, die gewünschten Oberflächeneigenschaften durch Prägen, Schleifen, Plasmabehandlung, Coronabehandlung, Sandstrahlen oder Kugelstrahlen herzustellen.

Mit Hilfe der vorliegenden Erfindung ist es möglich, eine Reihe von Formteilen im Kraftfahrzeugbereich herzustellen, beispielsweise Oberflächenbeschichtungen von Gegenständen, Anlagenteilen, Textilien, Verblendungen, Verkleidungen, insbesondere Bodenverkleidungen, Kofferraumauskleidungen, Dachauskleidungen, Armaturenbrettverkleidungen, Schalter, Schalthebelgriffe, Türgriffe und/oder Lenkradumhüllungen. Praktisch können die Lederabfälle überall dort eingesetzt werden, wo die optischen Eigenschaften eine wesentliche Rolle spielen. Darüber hinaus ist jedoch auch eine schalldämmender Effekt von Bedeutung.

Formteile im Sinne der vorliegenden Erfindung umfassen neben solchen, die im wesentlichen aus thermoplastischen Kunststoff- und und Lederabfällen bestehen auch solche, bei denen das Gemisch dieser Bestandteile auf einem Träger, beispielsweise einem Faservlies aufgebracht sind. Hierbei ist neben einer lagenmäßigen Beschichtung auch die Bereitstellung von Verbundwerkstoffen umfaßt.

Es ist selbstverständlich möglich, die gemahlenen Lederabfälle während des Compoundierens, insbesondere beim Mischen, Walzen, Kneten, Granulieren, insbesondere Heißgranulieren oder Kaltgranulieren, Zerkleinern oder Mahlen der thermoplastischen Kunststoffe beizugeben, sofern die Polymerisation oder Polykondensation noch nicht abgeschlossen ist. Weiterhin ist, es besonders bevorzugt, die gemahlenen Lederabfälle beim Gießen, insbesondere Monomergießen, Foliengießen, Formgießen, Ausgießen, Rotationsgießen und Schleudergießen, Tauchen, insbesondere Pastentauchen, Pulvertauchen und Streichen, Sintern, insbesondere Formsintern, Schüttsintern, Rotationssintern, Wirbelsintern, Flammspritzen und elektrostatischen Beschichten, Schäumen, Pressen, Walzen, Kalandrieren, Extrudieren oder Spritzgießen zuzugeben, sofern die Polymerisation oder Polykondensation noch nicht abgeschlossen ist. Eine weitere Ausführungsform des erfindungsgemäßen Verfahrens besteht darin, daß man die Lederabfälle in Form von Fasern gleicher Länge auf das noch nicht ausgehärtete Formteil aufbringt, ein elektrostatisches Feld anlegt und den Kunststoff aushärtet.

Hierbei wird das noch nicht ausgehärtete Formteil aus thermoplastischem oder elastischem duoplastischem Kunststoff mit Fasern aus Lederabfällen gleicher Länge bestreut und dabei einem elektrostatischen Feld (beispielsweise 20 000 bis 60 000 Volt) ausgesetzt. Die auf gleiche Länge geschnittenen Fasern richten sich im elektrostatischen Feld aus und schießen wie kleine Speere in die noch viskose Oberfläche des Kunststoffs ein. Der Beschleunigung der Fasern sind jedoch durch die Hochspannung Grenzen gesetzt, auch der Abstand zwischen den Polen darf nicht zu groß sein, weil durch die Luft ohnehin eine Abbremsung bewirkt wird und eine Erhöhung der Spannung keine Beschleunigung mehr, höchstens einen Funkenüberschlag bewirkt.

An nicht gewünschten Stellen kann der lose Faserstaub durch Umschalten des elektrostatischen Feldes oder nach der Fixierung auch durch Klopfen mit gleichzeitigem Absaugen entfernt werden.

## Patentansprüche

1. Verfahren zur Herstellung von Formteilen mit lederartigen Oberflächeneigenschaften im Kraftfahrzeugbereich, umfassend einen thermoplastischen oder elastischen duroplastischen Kunststoff und gemahlene Lederabfälle dadurch gekenzeichnet, daß man dem Kunststoff während der Polymerisation oder Polykondensation gemahlene Lederabfälle mit einer Faserlänge von 0,1 bis 5 mm in einer Menge von 60 bis zu 95 Gew.-%, bezogen auf das Formteil, beigibt.

2. Verfahren nach Anspruch 1, dadurch gekennzeichnet, daß man die gemahlenen Lederabfälle beim Gießen, insbesondere Monomergießen, Foliengießen, Formgießen, Ausgießen, Rotationsgießen und Schleudergießen, Tauchen, insbesondere Pastentauchen und Pulvertauchen, Streichen, Sintern, insbesondere Formsintern, Schüttsintern, Rotationssintern, Wirbelsintern, Flammspritzen und elektrostatischen Bechichtungen, Schäumen, Pressen, Walzen, Kalandrieren, Extrudieren oder Spritzgießen beigibt, sofern die Polymerisation oder Polykondensation noch nicht abgeschlossen ist.

3. Verfahren nach Anspruch 1 oder 2, dadurch gekennzeichnet, daß man die Lederabfälle in Form von Fasern gleicher Länge auf das noch nicht ausgehärtete Formteil aufbringt, ein elektrostatisches Feld anlegt und den Kunststoff aushärtet.

4. Verfahren nach einem oder mehreren der Ansprüche 1 bis 3, dadurch gekennzeichnet, daß man die gewünschten Oberflächeneigenschaften durch Prägen, Schleifen, Plasmabehandlung, Coronabehandlung, Sandstrahlen oder Kugelstrahlen herstellt.

5. Verfahren nach einem oder mehreren der Ansprüche 1 bis 4 zur Herstellung von Formteilen, umfassend Oberflächenbeschichtungen von Gegenständen, Anlagenteilen, Textilien, Verblendungen, Verkleidungen, insbesondere Bodenverkleidungen, Kofferraumauskleidungen, Dachauskleidungen, Armaturenbrettverkleidungen, Schalter, Schalthebelgriffe, Türgriffe und Lenkradumhüllungen.

## Claims

1. A process for producing molded articles with leather-like surface properties for use in the automobile industry, comprising a thermoplastic material or elastic duroplast and ground leather waste, characterized in that ground leather waste having a fiber length of from 0.1 to 5 mm is added to said thermoplastic materials or elastic duroplasts in an amount of from 60 to 95% per weight, based on the molded article, during polymerization or polycondensation.

2. The process according to claim 1, characterized in that said ground leather waste is added during casting, in particular monomer casting, film casting, die casting, open casting, rotational casting and centrifugal casting, dipping, in particular paste dipping and powder dipping, brushing, sintering, in particular sintering molding, pour sintering, rotational sintering, fluidized-bed coating, flame spraying and electrostatic coatings, foaming, compression molding, rolling, calendering, extrusion or injection molding, while the polymerization or polycondensation is not yet completed.

3. The process according to claim 1 or 2, characterized in that said ground leather waste is applied in the form of fibers of the same length to the still uncured molded article, an electrostatic field is applied, and the plastic material is cured.

4. The process according to one or more of claims 1 to 3, characterized in that the desired surface properties are obtained by embossing, grinding, plasma treatment, corona discharge, sandblasting or shot peening.

5. The process according to one or more of claims 1 to 4 for producing molded articles comprising surface coatings of articles, parts of installations, textiles, facings, sheathings, in particular floor coverings, linings of luggage boots, roof linings, dashboard sheathings, switches, shift lever knobs, door knobs and steering wheel coverings.

## Revendications

1. Procédé pour fabriquer des pièces moulées possédant des caractéristiques de surface analogues au cuir, pour l'industrie automobile, comprenant une matière thermoplastique ou une matière plastique thermodurcissable élastique et des déchets de cuir broyés, caractérisé en ce qu'on ajoute à la matière plastique, pendant la polymérisation ou la polycondensation, des déchets de cuir broyés possédant une longueur de fibres de 0,1 à 5 mm en une quantité de 60 à 95 % en poids, rapportés à la pièce moulée.

2. Procédé selon la revendication 1, caractérisé en ce qu'on ajoute les déchets de cuir broyés en cours de coulée, notamment de coulée de monomères, de coulée en film, de coulée en moule, de moulage de pâtes, de moulage par rotation et de moulage par centrifugation, d'immersion, notamment d'immersion en pâte et d'immersion en poudres, d'enduction, de frittage, notamment de frittage en moule, de frittage sans compression, de frittage par rotation, de frittage en turbulence, de projection à la flamme et de dépôt électrostatique de revêtements, de moussage, de pressage, de laminage, de calandrage, d' extrusion ou de moulage par injection, tant que la polymérisation ou la polycondensation n'est pas encore terminée.

3. Procédé selon la revendication 1 ou 2, caractérisé en ce qu'on dépose les déchets de cuir sous forme de fibres de même longueur sur la pièce moulée non encore durcie, on applique un champ électrostatique et on fait durcir la matière plastique.

4. Procédé selon une ou plusieurs des revendications 1 à 3, caractérisé en ce qu'on obtient les caractéristiques de surface désirées par gaufrage, meulage, traitement par un plasma, traitement par effet couronne, sablage ou projection de billes.

5. Procédé selon une ou plusieurs des revendications 1 à 4 pour fabriquer des pièces moulées, incluant des revêtements superficiels d'objets, d'éléments à appliquer, de textiles, de parements, de garnitures d'habillage, notamment de revêtements de sol, de garnitures de coffres à bagages, de garnitures de pavillons, de revêtements de tableaux de bord, d'interrupteurs, de poignées de leviers de changement de vitesse, de poignées de portes et d'enveloppes d'habillage de volants.
